(19) **Europäisches Patentamt / European Patent Office / Office européen des brevets**

(11) **EP 2 810 223 B1**

(12) **FASCICULE DE BREVET EUROPEEN**

(45) Date de publication et mention
de la délivrance du brevet:
**24.03.2021 Bulletin 2021/12**

(21) Numéro de dépôt: **13702075.6**

(22) Date de dépôt: **04.02.2013**

(51) Int Cl.:
***G06N 5/02** (2006.01)*

(86) Numéro de dépôt international:
**PCT/EP2013/052164**

(87) Numéro de publication internationale:
**WO 2013/113929 (08.08.2013 Gazette 2013/32)**

(54) **PROCÉDÉ DE TRAITEMENT D'INFORMATIONS INCERTAINES ISSUES D'UNE PLURALITÉ DE SOURCES HÉTÉROGÈNES ET PROCÉDÉ D'AIDE AUTOMATIQUE À LA DÉCISION ASSOCIÉ**

VERFAHREN ZUR VERARBEITUNG UNGEWISSER INFORMATION AUS HETEROGENEN QUELLEN UND ZUR ENTSCHEIDUNGSFINDUNG

METHOD OF UNCERTAIN INFORMATION MANAGEMENT FROM DIFFERENT HETEROGENEOUS INFORMATION SOURCES AND OF DECISION MAKING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.02.2012 FR 1200325**

(43) Date de publication de la demande:
**10.12.2014 Bulletin 2014/50**

(73) Titulaire: **THALES**
**92200 Neuilly-sur-Seine (FR)**

(72) Inventeurs:
- **LAUDY, Claire**
**F-91767 Palaiseau (FR)**
- **PICHON, Frédéric**
**F-91767 Palaiseau (FR)**
- **FOSSIER, Simon**
**F-91767 Palaiseau (FR)**
- **MUSEUX, Nicolas**
**F-91767 Palaiseau (FR)**
- **ALIGNE, Florence**
**F-91767 Palaiseau (FR)**

(74) Mandataire: **Lavoix**
**2, place d'Estienne d'Orves**
**75441 Paris Cedex 09 (FR)**

(56) Documents cités:
- **CLAIRE LAUDY ET AL: "High-level fusion based on conceptual graphs", INFORMATION FUSION, 2007 10TH INTERNATIONAL CONFERENCE ON, IEEE, PI, 31 juillet 2007 (2007-07-31), pages 1-8, XP031193922, ISBN: 978-0-662-45804-3**
- **Anne Dromigny-Badin ET AL: "Fusion de données radioscopiques et ultrasonores via la théorie de l'évidence", Traitement du Signal, 31 décembre 1997 (1997-12-31), XP55045677, Extrait de l'Internet: URL:http://documents.irevues.inist.fr/bitstream/handle/2042/2019/005.PDF TEXTE.pdf?sequence=1 [extrait le 2012-11-27]**
- **Alain Appriou: "Approche générique de la gestion de l'incertain dans les processus de fusion multisenseur", Traitement du Signal, 31 décembre 2005 (2005-12-31), pages 307-319, XP55045678, Extrait de l'Internet: URL:http://documents.irevues.inist.fr/bitstream/handle/2042/4400/appriou couleur.pdf?sequence=1 [extrait le 2012-11-27]**

**Description**

La présente invention concerne un procédé de traitement d'informations incertaines issues d'une pluralité de sources hétérogènes, adapté à être appliqué dans un système automatique d'aide à la décision basé sur des informations incertaines et un procédé d'aide automatique à la décision associé.

L'invention se situe dans le domaine du traitement des informations, avec application par exemple à l'aide à la décision ou à l'analyse de situations ou de systèmes complexes.

De nombreuses applications militaires et civiles utilisent des systèmes d'analyse et de décision basés sur des informations issues d'une pluralité de sources hétérogènes, comme par exemple une pluralité de capteurs. Dans le domaine militaire, on peut citer la surveillance de périmètre, la détection/classification de cible, l'auto-guidage des munitions. Dans le domaine civil, on peut citer les domaines de la maintenance industrielle, des prévisions météorologiques, de la télédétection.

Il existe diverses méthodes de combinaison ou fusion d'informations issues de multiples capteurs pour générer un résultat d'aide à la décision.

On connaît d'une part des méthodes de fusion d'informations structurées, prenant en compte la structure hiérarchique et la sémantique des informations, comme par exemple la méthode de fusion à partir d'une représentation sous forme de graphes conceptuels. Notamment la méthode de fusion proposée dans la demande de brevet français numéro FR08.07232 applique des opérations sur des graphes conceptuels permettant d'identifier des ressemblances de structures. Cependant, cette méthode ne fournit pas d'évaluation de fiabilité associée à un résultat de fusion.

D'autre part, on connaît des méthodes de fusion d'informations incertaines, typiquement des méthodes probabilistes basées sur la théorie bayesienne ou des méthodes utilisant la théorie des fonctions de croyance, qui est une théorie non probabiliste basée sur la théorie de l'évidence de Dempster-Shafer. La théorie des fonctions de croyance définit un ensemble exhaustif de toutes les valeurs possibles d'une variable. Une fonction de masse associe à chaque sous-partie de l'ensemble des valeurs possibles une masse de croyance entre 0 et 1, de façon à ce que la somme des masses de croyance de toutes les sous-parties soit égale à 1. Cela permet de définir un cadre général et de modéliser tous les états de connaissance entre une ignorance totale et une connaissance certaine. Des opérations de fusion d'informations sont définies par des opérateurs de combinaison. Cependant, les méthodes connues de fusion d'informations incertaines sont basées sur une représentation ensembliste et non une représentation structurée de la connaissance prenant en compte la structure hiérarchique et la sémantique des informations.

Le document "High-level fusion based on conceptual graphs", Claire LAUDY et al, INFORMATION FUSION, 2007 10TH INTERNATIONAL CONFERENCE ON, IEEE,(2007-07-01), pages 1-8, divulgue un procédé de fusion de données issues d'une pluralité de sources hétérogènes utilisant une représentation hiérachisée. Le processus est basé sur des informations incertaines et est appliqué dans un système automatique d'aide à la décision.

Le document "Approche générique de la gestion de l'incertain dans les processus de fusion multisenseur", Alain Appriou,Traitement du Signal, 31 décembre 2005 (2005-12-31), pages 307-319, divulgue un système de fusion de données incertaines avec un niveau de certitude global tenant compte du niveau de certitude associé à chaque observation.

En pratique, dans certaines applications, les informations à fusionner sont issues de diverses sources d'informations, et, selon la source d'informations, différents sous-ensembles d'informations relatives à un système à analyser sont fournies. Dans ce cas, on dispose d'observations comprenant des informations qui sont non seulement incertaines, mais également partielles par rapport au système ou à la situation observée.

Il existe un besoin d'améliorer les systèmes de décision à base d'informations incertaines et provenant de sources hétérogènes fournissant des informations incomplètes, notamment en fournissant une évaluation de certitude d'un résultat de fusion d'informations et d'une requête définie par un opérateur.

A cet effet, l'invention propose un procédé de traitement d'informations incertaines issues d'une pluralité de sources hétérogènes, adapté à être appliqué dans un système automatique d'aide à la décision basé sur des informations incertaines, tel que défini par la revendication 1.

Avantageusement, l'invention permet de prendre en compte la structure hiérarchique et sémantique des informations, et de fournir un niveau de certitude associé à un résultat de fusion structurée.

D'autres caractéristiques et avantages de l'invention ressortiront de la description qui en est donnée ci-dessous, à titre indicatif et nullement limitatif, en référence aux figures annexées, parmi lesquelles :

-   la figure 1 est un schéma représentant les blocs fonctionnels d'un dispositif programmable apte à mettre en œuvre l'invention ;
-   la figure 2 est un organigramme d'un mode de réalisation d'un procédé d'aide à la décision selon l'invention ;
-   la figure 3 est un organigramme d'un premier mode de réalisation d'un procédé de traitement d'informations incertaines selon l'invention ;
-   la figure 4 est un exemple de structuration hiérarchique décrivant un exemple de situation à analyser ;

- la figure 5 illustre un modèle de graphe conceptuel associé à l'exemple de la figure 4 ;
- la figure 6 illustre un graphe conceptuel correspondant à une première observation dans le cadre de l'exemple de la figure 4 ;
- la figure 7 illustre un graphe conceptuel correspondant à une deuxième observation dans le cadre de l'exemple de la figure 4 ;
- la figure 8 illustre un graphe conceptuel correspondant à une fusion des graphes respectifs des figures 6 et 7 ;
- la figure 9 est un organigramme d'un deuxième mode de réalisation d'un procédé de traitement d'informations incertaines selon l'invention, et
- la figure 10 est un organigramme d'un mode de réalisation de l'évaluation d'une mesure de confiance d'une requête selon l'invention.

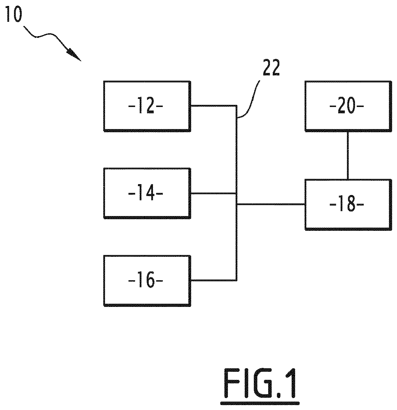

La figure 1 illustre les principaux blocs d'un dispositif apte à mettre en œuvre le procédé de traitement d'informations incertaines selon l'invention et le procédé d'aide à la décision selon l'invention.

Un dispositif 10 apte à mettre en œuvre l'invention, typiquement un dispositif programmable de type ordinateur, comprend un écran 12, un moyen 14 de saisie des commandes d'un utilisateur, par exemple un clavier, optionnellement un moyen supplémentaire de pointage 16, tel une souris, permettant de sélectionner des éléments graphiques affichés sur l'écran 12, une unité centrale de traitement 18, ou processeur, apte à exécuter des instructions de programme de commande lorsque le dispositif 10 est mis sous tension. Le dispositif 10 comporte également des moyens de stockage d'informations 20, par exemple des registres, aptes à stocker des instructions de code exécutable permettant la mise en œuvre de programmes comportant des instructions de code aptes à mettre en œuvre les divers procédés selon l'invention. Les divers blocs fonctionnels du dispositif 10 décrits ci-dessus sont connectés via un bus de communication 22.

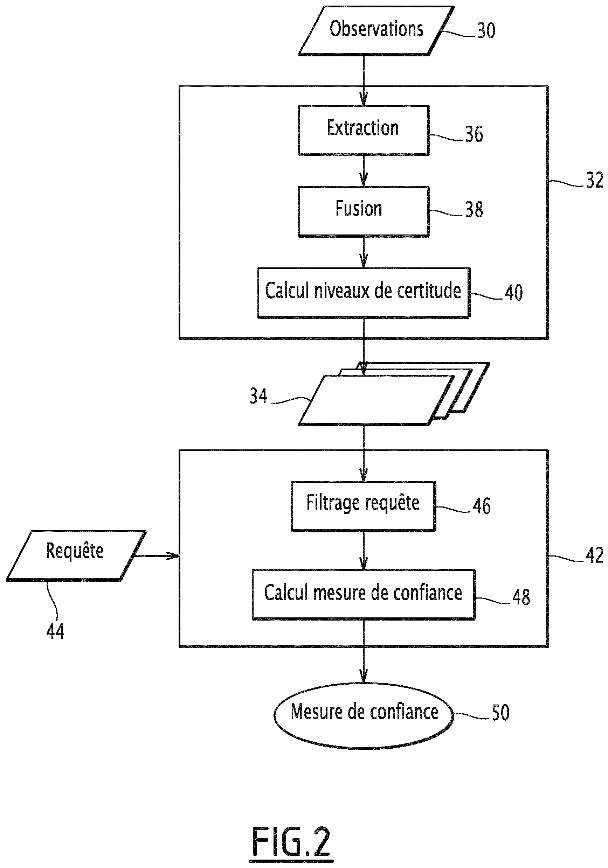

La figure 2 représente les principales étapes mises en œuvre dans un procédé d'aide à la décision selon un mode de réalisation de l'invention, typiquement mises en œuvre par un processeur 18 d'un dispositif 10.

En entrée, on dispose d'un ensemble 30 d'informations incertaines relatives à une situation observée. La terminologie situation observée est utilisée pour désigner divers cas d'application, comme par exemple un système ou une situation à analyser ou un site à surveiller.

Les informations incertaines 30 sont issues de diverses sources d'informations hétérogènes qui sont par exemple des capteurs aptes à mesurer divers paramètres (température, pression) ou à saisir des informations, comme par exemple des signaux audio ou vidéo en relation par exemple avec la situation observée. Par ailleurs, d'autres sources d'informations de haut niveau, par exemple des comptes-rendus d'observations, sont également prises en compte. Les diverses informations obtenues sont en général incertaines, car elles ont un niveau de fiabilité associé. Par exemple, les capteurs ou instruments de mesure ont, de manière intrinsèque, un niveau de fiabilité de mesure associé. De plus, d'autres paramètres sont susceptibles de faire varier le niveau de fiabilité des informations recueillies, par exemple la distance entre un capteur, par exemple une caméra de prise de vues, et le site observé, ou bien des conditions externes telles que les conditions météorologiques par exemple. Il s'agit donc d'un ensemble 30 d'informations incertaines, potentiellement issues de diverses sources hétérogènes, recueillies sous forme d'observations.

Le procédé comporte une première phase 32 de traitement des informations incertaines, permettant d'obtenir en sortie plusieurs ensembles structurés dits ensembles de fusion 34, représentatifs des observations 30 en entrée du procédé, ces ensembles de fusion ayant chacun un niveau de certitude global associé. Ces ensembles de fusion 34 sont structurés par rapport à un modèle hiérarchique structuré, appelé simplement modèle structuré par la suite, relatif à la situation observée, définissant des entités et des relations entre les entités, représentatif des informations incertaines à fusionner. Un tel modèle structuré est créé soit automatiquement, soit avec l'aide d'un expert, et il est apte à modéliser la situation observée selon les diverses informations recueillies.

La première phase de traitement 32 comporte notamment une étape 36 de mise en œuvre d'outils extraction 36 permettant des structurer les observations et d'associer à chaque observation un niveau de certitude d'observation, une étape 38 de fusion des observations structurées, prenant en compte le modèle structuré. Enfin, une étape 40 de traitement du résultat de l'étape de fusion, permettant d'obtenir des ensembles de fusion et d'effectuer le calcul d'un niveau de certitude global par ensemble de fusion.

Les ensembles de fusion 34 obtenus et leurs niveaux de certitude globaux respectifs associés sont ensuite utilisés dans une deuxième phase 42 d'aide à la décision. En entrée de cette deuxième phase 42 est fournie une requête 44, typiquement formulée par un opérateur, ou issue d'une phase préalable d'analyse de la situation, portant sur tout ou partie des entités du modèle structuré défini précédemment.

La phase d'aide à la décision 42 comprend une étape 46 de filtrage des ensembles de fusion 34 obtenus précédemment en fonction de la requête 44, suivie d'une étape de calcul 48 d'une mesure de confiance associée à la requête 44. Dans le mode de réalisation préféré de l'invention, cette mesure de confiance est un intervalle de confiance calculé à partir des niveaux de certitude globaux associés aux ensembles de fusion 34. La sortie de la phase d'aide à la décision 42 est la mesure de confiance 50 associée à la requête 44, cette mesure étant ensuite transmise à l'opérateur, par exemple par un affichage sur l'écran 12 dispositif 10 mettant en œuvre l'invention. Ainsi, l'opérateur bénéficie avantageusement d'une mesure de confiance 50 associée à sa requête 44, qu'il peut interpréter facilement, alors que l'ensemble d'observations d'informations incertaines initiales est généralement en pratique un ensemble très étendu et complexe, qu'il serait difficile à interpréter.

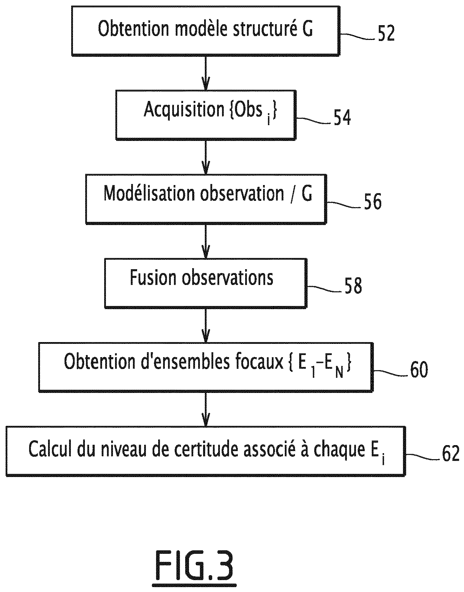

La figure 3 détaille les étapes de la première phase 32 de la figure 2 de traitement des informations incertaines, dans un mode de réalisation de l'invention.

Dans une première étape 52 un modèle structuré hiérarchique représentatif de la situation à modéliser et des informations observées est créé. Dans le mode de mise en œuvre préféré de l'invention, un tel modèle structuré est un graphe conceptuel G, formé de nœuds « entité » ou nœuds concepts et de nœuds définissant des relations entre les divers concepts. Chaque concept a un type associé, et les nœuds sont organisés de manière hiérarchique. Une telle représentation formelle nécessite une étape préalable de définition d'un vocabulaire permettant de définir l'ensemble de concepts ou entités utiles pour définir la situation observée, et les relations prévues entre ces concepts.

L'utilisation des graphes conceptuels pour modéliser des connaissances structurées est connue dans le domaine de l'intelligence artificielle.

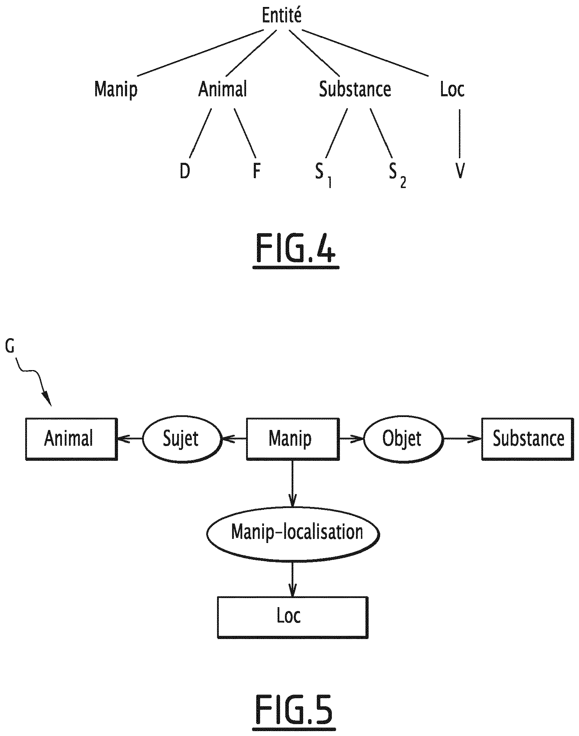

Néanmoins, pour mieux expliciter cette modélisation sous forme de graphe conceptuel, la figure 4 illustre un exemple de structuration hiérarchique d'entités définissant une expérimentation et la figure 5 illustre un modèle de graphe conceptuel G associé.

La figure 4 illustre notamment le vocabulaire utilisé pour définir les entités de l'expérimentation, et les niveaux hiérarchiques liant les entités.

Ainsi, en partant de la racine « Entité » (niveau zéro de la hiérarchie), quatre types d'entités de premier niveau sont définis, à savoir « Manip » désignant une manipulation, « Animal » désignant un sujet sur lequel on applique l'expérimentation, « Substance » désignant l'objet de la manipulation, par exemple l'injection d'une substance, et « Loc » désignant un lieu d'expérimentation. Seulement certaines entités de premier niveau ont des entités de niveau deux associées, à savoir l'entité « Animal » comprend deux sous-types, « D » désignant un chien (« dog ») et « F » désignant une grenouille (« frog »), l'entité « Substance » a les sous-types « $S_1$ » ou « $S_2$ », et la localisation comprend un sous-type « V » pour ville, qui prendra en pratique diverses valeurs.

Le graphe conceptuel G correspondant au premier niveau hiérarchique est illustré à la figure 5. Les entités sont représentées par des nœuds illustrés par des boîtes rectangulaires. Par rapport à la hiérarchie des entités illustrée à la figure 4, le graphe conceptuel G de la figure 5 ajoute des nœuds relationnels, illustrés par des boîtes arrondies, définissant les types des relations entre les entités. Ainsi, un « animal » est « sujet » d'une manipulation, dont l'objet « objet» est une « substance », et dont la localisation « manip_location » est de type « loc ». Il est bien entendu que cet exemple simplifié est uniquement à vocation explicative, des informations différentes, bien plus complexes, étant destinées à être traitées par le procédé de l'invention.

De retour à la figure 3, une fois le modèle structuré G établi, la ou les observations $Obs_i$ d'informations incertaines sont recueillies à l'étape 54 et modélisées selon le modèle structuré de type graphe conceptuel.

Notons à nouveau ici, comme déjà mentionné plus haut, que dans un mode de réalisation alternatif, le modèle structuré est créé à partir d'un ensemble d'observations recueillies par mise en œuvre d'outils adaptés d'extraction ou « data mining » en terminologie anglo-saxonne. Dans ce cas de figure, l'ordre des étapes 52 et 54 est inversé, et une étape intermédiaire d'extraction de modèle est insérée entre ces deux étapes.

Chaque observation recueillie comprend potentiellement plusieurs informations incertaines partielles, correspondant à des valeurs d'observation d'entités de différents niveaux du modèle structuré hiérarchique.

Chaque observation recueillie est modélisée selon le modèle structuré de type graphe conceptuel G à l'étape 56.

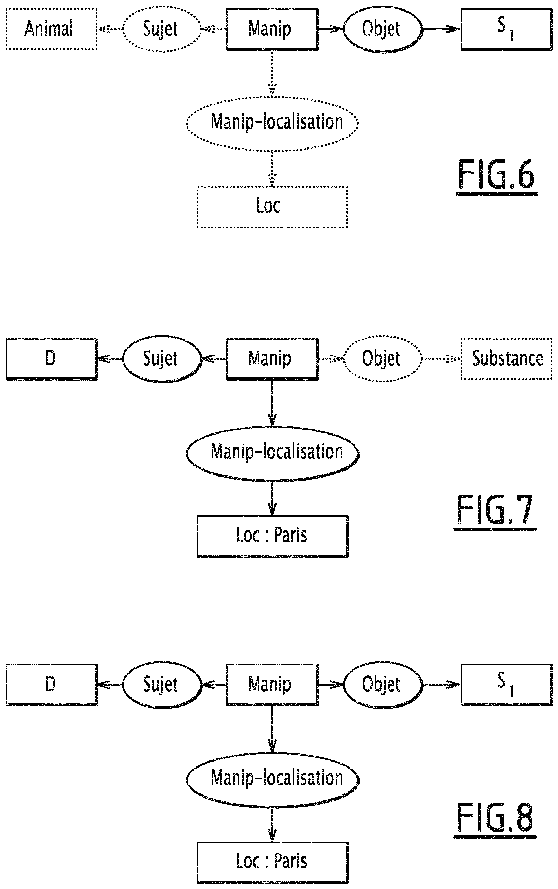

Ainsi, reprenant l'exemple du modèle de graphe conceptuel G de la figure 5, une première observation OBS1, dont la modélisation par graphe conceptuel est illustrée à la figure 6, comprend seulement les informations « manipulation » et « substance » égale à « $S_1$ », et une deuxième observation OBS2, dont la modélisation par graphe conceptuel est illustrée à la figure 7, comprend les informations « D » pour type d'animal, et « Paris » pour la localisation. Dans chaque graphe représenté respectivement aux figures 6 et 7, les entités n'ayant pas de valeur d'information renseignée par l'observation sont représentées en traits pointillés.

Chaque observation $Obs_i$ a un niveau de certitude d'observation $Nco_i$ associé. Un tel niveau de certitude peut être obtenu par les outils d'extraction, avec ou sans la contribution d'un expert, ou éventuellement calculés à partir des informations de fiabilité fournies par chaque source d'informations contribuant à l'observation.

Ainsi, à l'issue de l'étape 56, on dispose d'un ou plusieurs graphes conceptuels représentatifs d'observations, chacun étant une représentation structurée d'une observation et ayant un niveau de certitude d'observation associé.

A l'étape suivante 58, les représentations structurées sont fusionnées pour obtenir une représentation structurée fusionnée, selon une stratégie de fusion prédéfinie, utilisant par exemple la méthode de fusion décrite dans la demande de brevet français FR08.07232. Cette méthode de fusion comprend une opération de jointure maximale, comprenant la définition des fonctions de compatibilité de deux concepts ou d'informations, et le calcul de la valeur fusionnée de deux concepts ou informations selon les fonctions de compatibilité de prédéfinies, tenant compte du domaine d'application. Typiquement, les fonctions définissant la compatibilité et le résultat de la fusion sont définies par un expert du domaine d'application.

La méthode de fusion a pour résultat une ou plusieurs représentations structurées fusionnés : soit le concept fusionné, si les concepts initiaux sont compatibles, soit les concepts initiaux, si les concepts initiaux ne sont pas compatibles et donc pas fusionnables.

En reprenant l'exemple décrit précédemment, la fusion des graphes des figures 6 et 7, qui sont compatibles lorsque la fonction de compatibilité consiste à vérifier que pour chaque nœud entité (ou nœud concept), l'intersection entre les types des valeurs observées n'est pas nulle à un certain niveau hiérarchique, le résultat de la fusion est illustré à la figure 8.

En effet, comme le type « D » est un type descendant hiérarchiquement du type « Animal », l'intersection « Animal » et « D » est non nulle. Il en est de même pour les types « Substance » et « $S_1$ ». Quant à la précision de lieu « Paris », il s'agit bien d'une information de type « Loc ».

Ensuite, à l'étape suivante 60, une pluralité d'ensembles possibles, dits ensembles de fusion, appelés également ensembles focaux issus de la fusion, est obtenue à partir de la ou des représentations structurées fusionnées obtenues à l'étape de fusion 58. Chaque ensemble de fusion $E_i$ comprend un même nombre d'éléments, qui sont ordonnés selon le modèle structuré G, chaque élément correspondant à une entité du modèle structuré G. Chaque élément d'un ensemble de fusion est soit un type de nœud concept du graphe conceptuel G, soit une valeur d'information observée associée à un nœud concept. Typiquement, chaque élément est représentatif d'une entité du graphe conceptuel G, mais à un niveau de profondeur dans la hiérarchie variable selon les observations $Obs_j$ contribuant à l'ensemble de fusion $E_i$. En pratique, cette transposition du résultat de la fusion des graphes conceptuels en langage ensembliste permet d'appliquer ensuite la théorie des fonctions de croyance et de calculer un niveau de certitude global associé à chaque ensemble focal possible après fusion des observations.

Pour mieux illustrer cette étape 60, reprenant l'exemple du graphe conceptuel fusionné de la figure 8, les ensembles de fusion obtenus à partir du graphe conceptuel fusionné sont les suivants :

$$E_1 = \{(Animal, S_1, Loc, Manip)\}$$

$$E_2 = \{(D, \text{Substance}, Loc : Paris, Manip)\}$$

$$E_3 = E_1 \cap E_2 = \{(D, S_1, Loc : Paris, Manip)\}$$

Comme on peut le constater dans cet exemple, les éléments de l'ensemble $E_1$ proviennent de l'observation OBS1, les éléments de l'ensemble $E_2$ proviennent de l'observation OBS2, et les éléments de l'ensemble $E_3$ proviennent en partie de l'observation OBS1 et en partie de l'observation OBS2.

De retour à la figure 3, l'étape 60 est suivie de l'étape 62 de calcul des niveaux de certitude globaux associés à chacun des ensembles de fusion $E_i$ obtenus.

Le calcul appliqué à cette étape est basé sur la théorie des fonctions de croyance, qui est un développement connu de la théorie de l'évidence de Dempster-Shafer.

Pour rappel, soit $\Omega$ le cadre de discernement d'une variable $\omega$, où $\Omega = \{\omega_1, ..., \omega_K\}$ est l'ensemble fini de toutes les valeurs possibles pour la variable $\omega$.

Une masse de croyance m(A) associée à un sous-ensemble A de $\Omega$ est une fraction de la masse unité supportant la croyance de véracité de A. Tout sous-ensemble de $\Omega$ qui a une masse de croyance strictement supérieure à 0 est appelé un ensemble focal.

On définit pour un sous-ensemble A des fonctions calculables à partir des masses de croyance qui sont la fonction de croyance bel (A) et la fonction de plausibilité pl(A), définies comme suit :

$$bel(A) = \sum_{B \subseteq A, b \neq \varnothing} m(B), \ \forall A \in 2^\Omega \setminus \varnothing \qquad \text{(Eq1)}$$

$$pl(A) = \sum_{B \cap A \neq \varnothing} m(B) = bel(A) - bel(\overline{A}), \ \forall A \in 2^\Omega \setminus \varnothing \quad \text{(Eq2)}$$

Des règles de combinaison ont également été définies, par exemple la règle de Dempster non normalisée

notée $\otimes$, et définie par :

$$m_{1\otimes2}(A) = \sum_{B\cap C=A} m_1(B)m_2(C), \quad \forall A \in \Omega \quad \text{(Eq3)}$$

où $m_1$ et $m_2$ sont deux fonctions de masse de croyance et $m_{1\otimes2}$ est la fonction de masse conjointe.

Selon le mode de réalisation préféré de l'invention, deux observations O et O' étant fusionnées, on calcule le niveau de certitude global associé à chaque ensemble de fusion, qui est un ensemble focal issu de la fusion, de la manière décrite ci-après.

Chaque observation O a un niveau de certitude associé $\varepsilon_O$, qui est utilisé comme une masse de croyance pour appliquer la théorie des fonctions de croyance.

Nous allons expliciter le calcul du niveau de certitude global associé à chaque ensemble de fusion issu d'une fusion d'observations de manière théorique.

Soit G le graphe conceptuel, représentatif de $t$ entités ou nœuds concepts de types respectifs $C_i^{\text{mod}}, 1 \leq i \leq t$.

Le cadre complet de discernement est l'ensemble suivant :

$$\Omega = \left\{ (c_1^{\text{mod}}, c_2^{\text{mod}}, ..., c_t^{\text{mod}}), c_1^{\text{mod}} \in C_1^{\text{mod}}, c_2^{\text{mod}} \in C_2^{\text{mod}}, ..., c_t^{\text{mod}} \in C_t^{\text{mod}} \right\}$$

Une observation donnée O a un graphe conceptuel $G_O$ associé, et comporte un nombre $t_o \leq t$ d'instanciations ou valeurs d'informations correspondant aux nœuds conceptuels du graphe conceptuel G, comme déjà expliqué ci-dessus.

On associe à O à partir de son graphe conceptuel $G_o$ un ensemble $Eo \subseteq \Omega$

$$\text{Eo} = C_1 \times C_2 \times ... \times C_t, \ C_1 \subseteq C_1^{\text{mod}}, \ C_2 \subseteq C_2^{\text{mod}} ..., \ C_t \subseteq C_t^{\text{mod}}$$

Chaque Ci appartient à un nœud concept $C_i^{\text{mod}}$.

Les deux ensembles focaux correspondant à l'observation O sont alors $E_O$ et $\Omega$. Les masses de croyance y respectivement associées sont :

$$m_O(E_O) = \varepsilon_O$$

$$m_O(\Omega) = 1 - \varepsilon_O$$

Dans cet exemple, l'ensemble focal $E_O$ est issu de l'observation O seule, donc seules les valeurs d'informations de O contribuent à cet ensemble focal. Il s'agit du cas où l'observation O est la première observation, qui est interprétée dans le cadre du modèle structuré G.

De la même manière, on définit une nouvelle observation O', que l'on représente par une fonction de masse $m_{O'}$ définie par $m_{O'}(E_{O'}) = \varepsilon_{O'}$ et $m_{O'}(\Omega) = 1 - \varepsilon_{O'}$.

On combine alors les fonctions de masse $m_O$ et $m_{O'}$ en suivant une règle de combinaison multiplicative-additive, ce qui fournit une masse associée aux deux observations, $m_{O+O'}$. La quantité $m_{O+O'}$ fournit le niveau de certitude global associé à chaque ensemble focal issu de la fusion auquel contribuent les deux observations.

Les observations ultérieures sont traitées de manière similaire en créant les ensembles focaux associés et en utilisant incrémentalement la même règle de combinaison.

Notons que la masse de croyance, et donc le niveau de certitude global associé à chaque ensemble focal issu de la fusion, change à chaque nouvelle fusion. D'une manière générale, lorsqu'on dispose de plusieurs observations, chaque ensemble focal obtenu correspond à une hypothèse de fusion à laquelle contribue un sous-ensemble des observations dont on dispose.

En considérant l'exemple de la fusion illustrée dans les figures 6, 7 et 8 et mettant en scène deux observations OBS1 et OBS2, si OBS1 a un niveau de certitude $\varepsilon_1$=0.9 et OBS2 a un niveau de certitude $\varepsilon_2$=0.8, le processus de combinaison multiplicative-additive fournit les masses de croyance respectives suivantes, correspondant aux ensembles focaux résultant de la fusion :

$$m_{1+2}(E_1) = 0.9 * (1 - 0.8) = 0.18$$

$$m_{1+2}(E_2) = (1 - 0.9) * 0.8 = 0.08$$

$$m_{1+2}(E_1 \cap E_2) = 0.9 * 0.8 = 0.72$$

$$m_{1+2}(\Omega) = (1 - 0.9) * (1 - 0.8) = 0.02$$

On note donc que dans cet exemple, l'ensemble de fusion $E_1 \cap E_2$ auquel contribuent les deux observations OBS1 et OBS2 a le niveau de certitude global associé le plus élevé, ce qui est cohérent compte tenu des hauts niveaux de certitude des deux observations séparées.

A l'issue de l'étape 62 on dispose donc d'un ensemble d'ensembles focaux ou ensembles de fusion, chacun ayant un niveau de certitude global calculé associé. Ces ensembles issus de la fusion et les niveaux de certitude globaux associés sont mémorisés dans les moyens de stockage 20 du dispositif 10 mettant en œuvre l'invention.

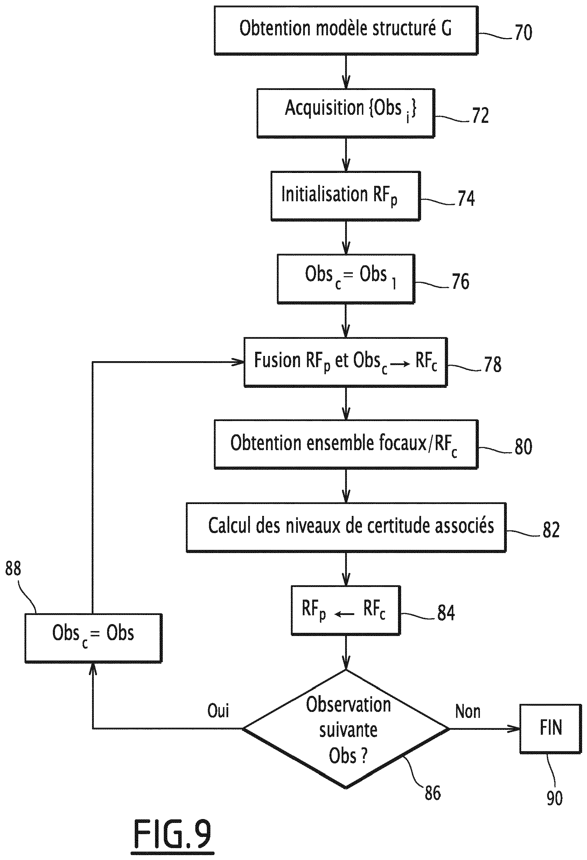

Selon une variante du mode de réalisation de la figure 3, les observations sont traitées de manière incrémentale, comme illustré à la figure 9.

La figure 9 détaille les étapes de la première phase 32 de la figure 2 de traitement des informations incertaines, dans un mode de réalisation alternatif de l'invention, dans lequel les opérations de fusion des observations et de calcul des niveaux de certitude globaux associés aux ensembles focaux issus du résultat de la fusion sont effectuées de manière incrémentale.

La première étape 70 est analogue à l'étape 52 déjà décrite d'obtention d'un modèle structuré G sous forme de graphe conceptuel.

Ensuite, à l'étape 72, une ou plusieurs observations $Obs_i$ sont recueillies.

L'étape 72 est suivie d'une étape 74 d'initialisation d'un graphe conceptuel représentatif de la fusion précédente, noté $RF_P$, et initialisé au graphe conceptuel G lui-même. L'étape suivante 76 initialise une variable représentative d'une observation courante $Obs_c$ à la première observation recueillie, $Obs_1$.

A l'étape suivante 78, analogue à l'étape 58 de la figure 3 déjà décrite, la représentation structurée de l'observation courante $Obs_c$ est fusionnée avec la représentation structurée fusionnée précédente $RF_P$ pour obtenir un résultat de fusion courante $RF_C$, sous forme de graphe conceptuel. Les ensembles de fusion correspondants au résultat de fusion courante $RF_c$ sont ensuite obtenus à l'étape 80, selon la méthode décrite ci-dessus. Ensuite, les niveaux de certitude globaux associés respectivement à chaque ensemble de fusion sont obtenus à l'étape 82.

Le graphe conceptuel représentatif du résultat de fusion précédente $RF_P$ est mis à jour avec le graphe conceptuel $RF_C$ à l'étape 84.

Ensuite il est vérifié à l'étape 86 s'il existe une nouvelle observation Obs disponible. En cas de réponse positive, la variable $Obs_c$ est mise à jour avec cette nouvelle observation Obs, et les étapes 78 à 86 sont répétées. En cas de réponse négative, la phase de traitement d'informations incertaines prend fin 90.

Comme mentionné ci-dessus, lors de la fusion de représentations structurées relatives aux observations (étapes 58 et 78), la compatibilité des observations est vérifiée.

En cas de vérification positive, le résultat de la fusion est un graphe conceptuel unique.

En cas de vérification négative, donc si l'observation à fusionner $Obs_c$ n'est pas compatible avec le graphe conceptuel représentatif de la fusion précédente $RF_P$, deux choix sont possibles : conserver le conflit entre hypothèses (si les graphes portent sur le même objet) ou créer plusieurs hypothèses de fusion (l'hypothèse correspondant à la supposition que les observations ne portent pas, en fait, sur les mêmes objets).

Dans le cas de la création de plusieurs hypothèses, chaque hypothèse possède alors un graphe conceptuel associé, formé à partir d'observations précédentes compatibles, et est traitée indépendamment des autres. Selon le mode de réalisation préféré, on obtient une représentation structurée fusionnée compatible en utilisant seulement des observations compatibles avec la représentation structurée de l'observation courante. Dans ce cas, les traitements suivants, à savoir l'obtention 80 des ensembles focaux associés à chaque graphe conceptuel représentatif d'une fusion et le calcul 82 de niveaux d'incertitude globaux associés, sont effectués pour chaque graphe conceptuel correspondant à une hypothèse de fusion.

En reprenant l'exemple préalablement illustré en référence aux figures 4 à 8, supposons qu'une troisième observation OBS3 comporte les valeurs d'informations suivantes : « manipulation » et substance égale à « $S_2$ ». Selon la représentation hiérarchique de la figure 4, il est clair que « $S_1$ » et « $S_2$ » sont deux branches distinctes. Le critère de comptabilité d'intersection non nulle indique la non compatibilité car $\{S1\} \cap \{S2\} = \varnothing$. Les observations OBS1 et OBS2 sont incompatibles selon ce critère de compatibilité.

Les calculs de niveaux de certitude globaux associés se font de la même manière pour chaque pluralité d'ensembles de fusion correspondant à un graphe conceptuel issu d'une hypothèse de fusion.

Comme illustré à la figure 2, une fois les niveaux de certitude globaux associés aux ensembles de fusion, une deuxième phase mise en œuvre dans le procédé d'aide à la décision, la phase 42 de la figure 3, concerne le traitement d'une requête.

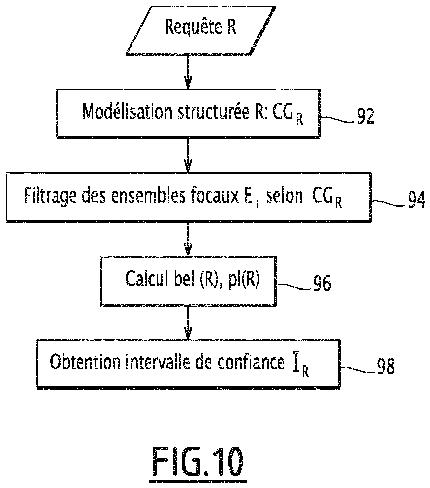

La figure 10 illustre les principales étapes de la phase 42, selon un mode de réalisation de l'invention.

Une requête R est fournie en entrée, par exemple par un opérateur, via une interface graphique d'un dispositif 10 apte à mettre en œuvre l'invention.

La requête R porte sur tout ou partie des entités du modèle structuré G, qui englobe la description complète de la situation observée.

L'étape 92 consiste à modéliser la requête selon le modèle structuré G, qui est un graphe conceptuel dans ce mode de réalisation, pour obtenir un graphe conceptuel associé à la requête, $CG_R$.

Le graphe conceptuel $CG_R$ obtenu à l'étape 92 est ensuite utilisé à l'étape 94 pour filtrer les ensembles focaux résultats de la fusion obtenus précédemment. S'il y a plusieurs hypothèses de fusion, le traitement se fait pour chaque hypothèse séparément.

En effet, si la requête R porte seulement sur un sous-ensemble d'entités du graphe conceptuel G, par exemple si la requête ne porte que sur les entités « Animal » et « Substance : $S_1$ » de l'exemple, seuls les ensembles de fusion compatibles avec cette requête sont retenus dans cette étape de filtrage. Dans notre exemple, il s'agit des ensembles de fusion correspondant à la fusion des observations OBS1 et OBS2.

Ainsi, une pluralité d'ensembles de fusion $\{E_{1R}, ..., E_{qR}\}$ qui sont compatibles avec la requête est retenue à l'étape de filtrage. Chacun de ces ensembles de fusion a un niveau de certitude global associé, mémorisé au préalable dans un espace mémoire 20 du dispositif mettant en œuvre l'invention.

A l'étape suivante 96, les fonctions de croyance bel(R) et de plausibilité pl(R) sont calculées, selon les équations (Eq1) et (Eq2), à partir des niveaux de certitude globaux, assimilés à des masses de croyance, associés aux ensembles de fusion compatibles avec la requête $\{E_{1R}, ..., E_{qR}\}$ retenus après filtrage.

Enfin, à l'étape 98, un intervalle de confiance $I_R$, dont les bornes sont fournies par les valeurs bel(R) et pl(R) calculées, est obtenu, cet intervalle de confiance étant une mesure de confiance associée à la requête R.

Cette mesure de confiance est fournie à un opérateur et lui permet d'évaluer la fiabilité de la requête et de prendre une décision en conséquence.

Notons que dans le cas où plusieurs hypothèses ont été construites, les mesures de confiance correspondant à chacune de ces hypothèses sont transmises à l'opérateur.

Il est bien entendu que les procédés de l'invention ont été illustrés tout le long de la description avec des exemples simples pour faciliter l'explication. En pratique, les procédés de l'invention s'appliquent pour des situations complexes à modéliser ou à évaluer, caractérisées par un grand nombre d'informations incertaines, dont la fusion et l'évaluation sans l'aide d'un programme dédié n'est pas faisable.

**Revendications**

1. Procédé de traitement d'informations incertaines issues d'une pluralité de sources hétérogènes, adapté à être appliqué dans un système automatique d'aide à la décision basé sur des informations incertaines, comprenant des étapes de :

   - obtention (36, 52, 70) d'un modèle structuré hiérarchique (G) définissant des entités et des relations entre lesdites entités, lesdites entités étant représentatives des informations incertaines à traiter, et
   - obtention (54, 72) d'une pluralité d'observations (Obs$_i$), chaque observation ayant un niveau de certitude d'observation associé, chaque observation étant constituée de valeurs d'information correspondant à au moins une partie des entités dudit modèle structuré hiérarchique (G),

   le procédé étant **caractérisé en ce qu'**il comporte en outre les étapes suivantes, mises en œuvre par un processeur d'un dispositif programmable :

   - détermination (56) d'une représentation structurée de chaque observation selon le modèle structuré hiérarchique (G),

- fusion (58, 78) des représentations structurées déterminées pour obtenir une représentation structurée fusionnée,
- obtention (38, 60, 80) d'une pluralité d'ensembles de fusion ($E_i$), chaque ensemble de fusion comprenant des éléments, chaque élément correspondant à une entité du modèle structuré hiérarchique (G), et étant soit égal à ladite entité, soit égal à une valeur d'information observée associée à ladite entité selon l'une au moins desdites observations ($Obs_i$), une telle observation étant dite observation contribuant audit ensemble de fusion ($E_i$), et pour chaque ensemble de fusion ($E_i$), calcul (40, 62, 82) d'un niveau de certitude global associé prenant en compte le niveau de certitude d'observation associé à chaque observation contribuant audit ensemble de fusion, le calcul comprenant :

   ∘ l'association d'une masse de croyance à chaque observation contribuant audit ensemble de fusion, égale au niveau de certitude associé à ladite observation, et
   ∘ une combinaison multiplicative-additive des masses de croyance respectives associées à chaque observation contribuant audit ensemble de fusion.

2. Procédé selon la revendication 1, **caractérisé en ce que** les étapes de détermination, fusion et calcul sont appliquées de manière incrémentale, la représentation structurée d'une observation courante étant fusionnée (78) avec une représentation structurée fusionnée précédente ($RF_p$).

3. Procédé selon la revendication 2, **caractérisé en ce que** l'étape de fusion (78) de la représentation structurée d'une observation courante avec une représentation structurée fusionnée précédente ($RF_P$) comprend :

   - une étape de vérification de la compatibilité de la représentation structurée de l'observation courante avec la représentation structurée fusionnée précédente, chaque valeur d'information de ladite observation courante étant comparée à chaque valeur d'information de la représentation structurée fusionnée précédente selon une fonction de compatibilité prédéterminée,
   - en cas de vérification négative, création d'au moins une autre hypothèse de fusion par :

      - obtention d'une représentation structurée fusionnée compatible avec la représentation structurée de l'observation courante, en utilisant seulement des observations compatibles avec l'observation courante selon ladite fonction de compatibilité prédéterminée,
      - application des étapes de fusion (78) et de calcul (82), la représentation structurée de l'observation courante étant fusionnée avec ladite représentation structurée fusionnée compatible.

4. Procédé selon l'une quelconque des revendications 1 à 3, **caractérisé en ce que** chaque ensemble de fusion comprend un même nombre d'éléments.

5. Procédé d'aide automatique à la décision sur des informations incertaines, **caractérisé en ce qu'**il comprend les étapes suivantes, mises en œuvre par un processeur d'un dispositif programmable :

   - traitement desdites informations incertaines issues d'une pluralité de sources hétérogènes selon l'une des revendications 1 à 4, permettant l'obtention d'une pluralité d'ensembles de fusion ayant chacun un niveau de certitude global associé,
   - obtention d'une requête (44) relative à au moins une partie desdites informations incertaines,
   - application (46, 94) d'un filtrage sur la pluralité d'ensembles de fusion selon ladite requête, permettant d'obtenir des ensembles de fusion compatibles avec ladite requête, et
   - calcul (48, 96) d'une mesure de confiance associée à ladite requête à partir des niveaux de certitude globaux associés aux ensembles de fusion compatibles avec ladite requête.

6. Procédé d'aide automatique à la décision selon la revendication 5, **caractérisé en ce que** le calcul (48, 96) d'une mesure de confiance met en œuvre des fonctions de croyance et de plausibilité utilisant les niveaux de certitude globaux associés aux ensembles de fusion compatibles avec ladite requête.

7. Procédé d'aide automatique à la décision selon la revendication 6, **caractérisé en ce que** ladite mesure de confiance associée à ladite requête est un intervalle de confiance.

8. Dispositif de traitement d'informations incertaines issues d'une pluralité de sources hétérogènes, comprenant :

- des moyens d'obtention d'un modèle structuré hiérarchique définissant des entités et des relations entre lesdites entités, lesdites entités étant représentatives des informations incertaines à traiter, et
- des moyens d'obtention d'une pluralité d'observations, chaque observation ayant un niveau de certitude d'observation associé, chaque observation étant constituée de valeurs d'information correspondant à au moins une partie des entités dudit modèle structuré hiérarchique (G),

le dispositif étant **caractérisé en ce qu'**il comporte en outre :

- des moyens de détermination d'une représentation structurée de chaque observation selon le modèle structuré hiérarchique (G),
- des moyens de fusion des représentations structurées déterminées pour obtenir une représentation structurée fusionnée,
- des moyens d'obtention d'une pluralité d'ensembles de fusion ($E_i$), chaque ensemble de fusion comprenant des éléments, chaque élément, correspondant à une entité du modèle structuré hiérarchique (G), étant soit égal à ladite entité, soit égal à une valeur d'information observée associée à ladite entité selon l'une au moins desdites observations ($Obs_i$), une telle observation étant dite observation contribuant audit ensemble de fusion ($E_i$),
- des moyens de calcul, pour chaque ensemble de fusion ($E_i$), d'un niveau de certitude global associé prenant en compte le niveau de certitude d'observation associé à chaque observation contribuant audit ensemble de fusion, adaptés à mettre en oeuvre :

  ◦ l'association d'une masse de croyance à chaque observation contribuant audit ensemble de fusion, égale au niveau de certitude associé à ladite observation, et
  ◦ une combinaison multiplicative-additive des masses de croyance respectives associées à chaque observation contribuant audit ensemble de fusion.

9. Système d'aide automatique à la décision basé sur des informations incertaines, **caractérisé en ce qu'**il comprend :

- un dispositif de traitement desdites informations incertaines selon la revendication 8, permettant l'obtention d'une pluralité d'ensembles de fusion ayant chacun un niveau de certitude global associé,
- des moyens d'obtention d'une requête relative à au moins une partie desdites informations incertaines,
- des moyens d'application d'un filtrage sur la pluralité d'ensembles de fusion selon ladite requête, permettant d'obtenir des ensembles de fusion compatibles avec ladite requête, et
- des moyens de calcul d'une mesure de confiance associée à ladite requête à partir des niveaux de certitude globaux associés aux ensembles de fusion compatibles avec ladite requête.

**Patentansprüche**

1. Verfahren zur Verarbeitung unsicherer Informationen aus einer Mehrzahl heterogener Quellen, das zur Anwendung in einem auf unsicheren Informationen basierenden automatischen Entscheidungsunterstützungssystem eingerichtet ist, aufweisend die Schritte :

- Beschaffung (36, 52, 70) eines hierarchischen strukturierten Modells (G), das Entitäten und Beziehungen zwischen den Entitäten definiert, wobei die Entitäten repräsentativ für die zu verarbeitenden unsicheren Informationen sind, und
- Beschaffung (54, 72) einer Mehrzahl von Beobachtungen ($Obs_i$), wobei jede Beobachtung ein zugeordnetes Beobachtungsgewissheitsniveau hat, wobei jede Beobachtung aus Informationswerten besteht, die zumindest einigen der Entitäten des hierarchischen strukturierten Modells (G) zugeordnet sind,

wobei das Verfahren **dadurch gekennzeichnet ist, dass** es außerdem die folgenden Schritte aufweist, die von einem Prozessor einer programmierbaren Vorrichtung durchgeführt werden:

- Bestimmung (56) einer strukturierten Repräsentation jeder Beobachtung gemäß dem hierarchischen strukturierten Modell (G),
- Zusammenführung (58, 78) der ermittelten strukturierten Repräsentationen, um eine zusammengeführte strukturierte Repräsentation zu erhalten,
- Beschaffung (38, 60, 80) einer Mehrzahl von Zusammenführungsmengen ($E_i$), wobei jede Zusammenfüh-

rungsmenge Elemente aufweist, wobei jedes Element einer Entität des hierarchischen strukturierten Modells (G) zugeordnet ist und entweder gleich der Entität oder gleich einem beobachteten Informationswert ist, der der Entität gemäß mindestens einer der Beobachtungen ($Obs_i$) zugeordnet ist, wobei eine solche Beobachtung zu der Zusammenführungsmenge ($E_i$) beitragende Beobachtung genannt wird,

und für jede Zusammenführungsmenge ($E_i$) Berechnung (40, 62, 82) eines zugeordneten Gesamtgewissheitsniveaus unter Berücksichtigung jedes der zu der Zusammenführungsmenge beitragenden Beobachtung zugeordneten Beobachtungsgewissheitsniveaus, wobei die Berechnung aufweist:

◦ Zuordnung einer Glaubensmasse zu jeder Beobachtung, die zu der Zusammenführungsmenge beiträgt, gleich dem Gewissheitsniveau, das der Beobachtung zugeordnet ist und
◦ eine multiplikativ-additive Kombination der jeweiligen Glaubensmassen, die jeder Beobachtung, die zu der Zusammenführungsmenge beiträgt, zugeordnet sind.

2.  Verfahren nach Anspruch 1, **dadurch gekennzeichnet, dass** die Schritte der Bestimmung, der Zusammenführung und der Berechnung inkrementell angewendet werden, wobei die strukturierte Repräsentation einer aktuellen Beobachtung mit einer vorherigen zusammengeführten strukturierten Repräsentation (RFp) zusammengeführt wird (78).

3.  Verfahren nach Anspruch 2, **dadurch gekennzeichnet, dass** der Schritt der Zusammenführung (78) der strukturierten Repräsentation einer aktuellen Beobachtung mit einer vorherigen zusammengeführten strukturierten Repräsentation (RFp) aufweist:

- einen Schritt zur Verifikation der Kompatibilität der strukturierten Repräsentation der aktuellen Beobachtung mit der vorherigen zusammengeführten strukturierten Repräsentation, wobei jeder Informationswert der aktuellen Beobachtung mit jedem Informationswert der vorherigen zusammengeführten strukturierten Repräsentation gemäß einer vorbestimmten Kompatibilitätsfunktion verglichen wird,
- bei negativer Verifikation, Bildung mindestens einer alternativen Fusionshypothese durch :

- Beschaffung einer zusammengeführten strukturierten Repräsentation, die mit der strukturierten Repräsentation der aktuellen Beobachtung kompatibel ist, wobei nur Beobachtungen verwendet werden, die mit der aktuellen Beobachtung gemäß der vorbestimmten Kompatibilitätsfunktion kompatibel sind,
- Anwendung der Schritte der Zusammenführung (78) und der Berechnung (82), wobei die strukturierte Repräsentation der aktuellen Beobachtung mit der kompatiblen zusammengeführten strukturierten Repräsentation zusammengeführt wird.

4.  Verfahren nach einem der Ansprüche 1 bis 3, **dadurch gekennzeichnet, dass** jede Zusammenführungsmenge dieselbe Anzahl von Elementen aufweist.

5.  Verfahren zur automatischen Entscheidungsunterstützung bei unsicheren Informationen, **dadurch gekennzeichnet, dass** es die folgenden Schritte aufweist, die von einem Prozessor einer programmierbaren Vorrichtung ausgeführt werden:

- Verarbeitung der unsicheren Informationen aus einer Mehrzahl von heterogenen Quellen gemäß einem der Ansprüche 1 bis 4, was die Beschaffung einer Mehrzahl von Zusammenführungsmengen ermöglicht, die jeweils ein zugeordnetes Gesamtgewissheitsniveau aufweisen,
- Erhalten einer Anfrage (44) für mindestens einige der unsicheren Informationen,
- Anwendung (46, 94) einer Filterung auf die Mehrzahl von Zusammenführungsmengen gemäß der Anfrage, was es ermöglicht, Zusammenführungsmengen zu beschaffen, die mit der Abfrage kompatibel sind, und
- Berechnung (48, 96) eines der Anfrage zugeordneten Konfidenzmaßes aus den Gesamtgewissheitsniveaus, die den mit der Anfrage kompatiblen Zusammenführungsmengen zugeordnet sind.

6.  Verfahren zur automatischen Entscheidungsunterstützung nach Anspruch 5, **dadurch gekennzeichnet, dass** die Berechnung (48, 96) eines Konfidenzmaßes Glaubens- und Plausibilitätsfunktionen unter Verwendung der globalen Gewissheitsniveaus, die den mit der Anfrage kompatiblen Zusammenführungsmengen zugeordnet sind, durchführt.

7.  Automatisches Entscheidungsunterstützungsverfahren nach Anspruch 6, **dadurch gekennzeichnet, dass** das der Anfrage zugeordnete Konfidenzmaß ein Konfidenzintervall ist.

8. Vorrichtung zur Verarbeitung von unsicheren Informationen aus einer Mehrzahl von heterogenen Quellen, aufweisend:

- Mittel zur Beschaffung eines hierarchischen strukturierten Modells, das Entitäten und Beziehungen zwischen den Entitäten definiert, wobei die Entitäten repräsentativ für die zu verarbeitenden unsicheren Informationen sind, und
- Mittel zur Beschaffung einer Mehrzahl von Beobachtungen, wobei jede Beobachtung ein zugeordnetes Beobachtungsgewissheitsniveau hat, wobei jede Beobachtung aus Informationswerten besteht, die zumindest einigen der Entitäten des hierarchisch strukturierten Modells (G) zugeordnet sind,

wobei die Vorrichtung **dadurch gekennzeichnet ist, dass** sie ferner aufweist:

- Mittel zur Bestimmung einer strukturierten Repräsentation jeder Beobachtung gemäß dem hierarchisch strukturierten Modell (G),
- Mittel zur Zusammenführung der ermittelten strukturierten Repräsentationen, um eine zusammengeführte strukturierte Repräsentation zu beschaffen,
- Mittel zur Beschaffung einer Mehrzahl von Zusammenführungsmengen ($E_i$), wobei jede Zusammenführungsmenge Elemente aufweist, wobei jedes Element, das einer Entität des hierarchisch strukturierten Modells (G) zugeordnet ist, entweder gleich der Entität oder gleich einem beobachteten Informationswert ist, der der Entität gemäß mindestens einer der Beobachtungen ($Obs_i$) zugeordnet ist, wobei eine solche Beobachtung zu der Zusammenführungsmenge ($E_i$) beitragende Beobachtung genannt wird,
- Mittel zur Berechnung, für jede Zusammenführungsmenge ($E_i$), eines zugeordneten Gesamtgewissheitsniveaus unter Berücksichtigung des Gewissheitsniveaus der Beobachtung, die jeder zu der Zusammenführungsmenge beitragenden Beobachtung zugeordnet ist, eingerichtet zum Durchführen:

  ◦ der Zuordnung einer Glaubensmasse zu jeder Beobachtung, die zu der Zusammenführungsmenge beiträgt, gleich dem Gewissheitsniveau, das der Beobachtung zugeordnet ist und
  ◦ einer multiplikativ-additive Kombination der jeweiligen Glaubensmassen, die jeder Beobachtung, die zu der Zusammenführungsmenge beiträgt, zugeordnet sind.

9. Automatisches Entscheidungsunterstützungssystem, das auf unsicherer Information basiert, **dadurch gekennzeichnet, dass** es aufweist:

- eine Vorrichtung zur Verarbeitung der unsicheren Information nach Anspruch 8, die es ermöglicht, eine Mehrzahl von Zusammenführungsmengen zu beschaffen, die jeweils ein zugeordnetes Gesamtgewissheitsniveau haben,
- Mittel zur Beschaffung einer Anfrage für mindestens einen Teil der unsicheren Information,
- Mittel zur Anwendung einer Filterung auf die Mehrzahl von Zusammenführungsmengen gemäß der Anfrage, was es ermöglicht, Zusammenführungsmengen zu beschaffen, die mit der Anfrage kompatibel sind, und
- Mittel zur Berechnung eines Konfidenzmaßes, das der Anfrage zugeordnet ist, aus den Gesamtgewissheitsniveaus, die den mit der Anfrage kompatiblen Zusammenführungsmengen zugeordnet sind.

**Claims**

1. Method for processing uncertain information originating from a plurality of heterogeneous sources, adapted to be applied in an automatic decision support system based on uncertain information, comprising steps of:

- obtaining (36, 52, 70) of a hierarchical structured model (G) which defines entities and relationships between said entities, said entities being representative of the uncertain information to be processed, and
- obtaining (54, 72) of a plurality of observations ($Obs_i$), each observation having an associated level of certainty of observation, each observation being composed of information values corresponding to at least a portion of the entities of said hierarchical structured model (G),

the method being **characterised in that** it further comprises the following steps, which are carried out by a processor of a programmable device:

- determination (56) of a structured representation of each observation according to the hierarchical structured model (G),

- fusion (58, 78) of the determined structured representations in order to obtain a fused structured representation,

- obtaining (38, 60, 80) of a plurality of fused sets ($E_i$), each fused set comprising elements, each element corresponding to an entity of the hierarchical structured model (G) and being either equal to said entity or equal to an observed information value associated with said entity according to at least one of said observations ($Obs_i$), such an observation being called an observation contributing to said fused set ($E_i$),

and for each fused set ($E_i$), calculation (40, 62, 82) of an associated overall level of certainty taking into account the level of certainty of observation associated with each observation contributing to said fused set, the calculation comprising:

> ○ the association of a belief weight with each observation contributing to said fused set, equal to the level of certainty associated with said observation, and
> ○ a multiplicative-additive combination of the respective belief weights associated with each observation contributing to said fused set.

2. Method according to claim 1, **characterised in that** the steps of determination, fusion and calculation are applied incrementally, the structured representation of a current observation being fused (78) with a preceding fused structured representation ($RF_p$).

3. Method according to claim 2, **characterised in that** the step of fusion (78) of the structured representation of a current observation with a preceding fused structured representation ($RF_p$) comprises:

- a step of verification of the compatibility of the structured representation of the current observation with the preceding fused structured representation, each information value of said current observation being compared with each information value of the preceding fused structured representation according to a predetermined compatibility function,

- in the case of a negative verification, creation of at least one other fusion hypothesis by:

- obtaining of a fused structured representation that is compatible with the structured representation of the current observation, using only observations that are compatible with the current observation according to said predetermined compatibility function,

- application of the steps of fusion (78) and calculation (82), the structured representation of the current observation being fused with said compatible fused structured representation.

4. Method according to any one of claims 1 to 3, **characterised in that** each fused set comprises the same number of elements.

5. Automatic decision support method based on uncertain information, **characterised in that** it comprises the following steps, which are carried out by a processor of a programmable device:

- processing of said uncertain information originating from a plurality of heterogeneous sources according to any one of claims 1 to 4, making it possible to obtain a plurality of fused sets each having an associated overall level of certainty,

- obtaining of a request (44) relating to at least a portion of said uncertain information,

- application (46, 94) of filtering to the plurality of fused sets according to said request, making it possible to obtain fused sets that are compatible with said request, and

- calculation (48, 96) of a confidence measure associated with said request from the overall levels of certainty associated with the fused sets that are compatible with said request.

6. Automatic decision support method according to claim 5, **characterised in that** the calculation (48, 96) of a confidence measure employs belief and plausibility functions which use the overall levels of certainty associated with the fused sets that are compatible with said request.

7. Automatic decision support method according to claim 6, **characterised in that** said confidence measure associated with said request is a confidence interval.

8. Device for processing uncertain information originating from a plurality of heterogeneous sources, comprising:

- means for obtaining a hierarchical structured model which defines entities and relationships between said entities, said entities being representative of the uncertain information to be processed, and
- means for obtaining a plurality of observations, each observation having an associated level of certainty of observation, each observation being composed of information values corresponding to at least a portion of the entities of said hierarchical structured model (G),

the device being **characterised in that** it further comprises:

- means for determining a structured representation of each observation according to the hierarchical structured model (G),
- means for fusing the determined structured representations in order to obtain a fused structured representation,
- means for obtaining a plurality of fused sets ($E_i$), each fused set comprising elements, each element, corresponding to an entity of the hierarchical structured model (G), being either equal to said entity or equal to an observed information value associated with said entity according to at least one of said observations ($Obs_i$), such an observation being called an observation contributing to said fused set ($E_i$),
- means for calculating, for each fused set ($E_i$), an associated overall level of certainty taking into account the level of certainty of observation associated with each observation contributing to said fused set, which means are adapted to carry out:

  ◦ the association of a belief weight with each observation contributing to said fused set, equal to the level of certainty associated with said observation, and
  ◦ a multiplicative-additive combination of the respective belief weights associated with each observation contributing to said fused set.

9. Automatic decision support system based on uncertain information, **characterised in that** it comprises:

- a device for processing said uncertain information according to claim 8, making it possible to obtain a plurality of fused sets each having an associated overall level of certainty,
- means for obtaining a request relating to at least a portion of said uncertain information,
- means for applying filtering to the plurality of fused sets according to said request, making it possible to obtain fused sets that are compatible with said request, and
- means for calculating a confidence measure associated with said request from the overall levels of certainty associated with the fused sets that are compatible with said request.

FIG.1

FIG.2

Obtention modèle structuré G ─ 52

↓

Acquisition {Obs $_i$} ─ 54

↓

Modélisation observation / G ─ 56

↓

Fusion observations ─ 58

↓

Obtention d'ensembles focaux { E $_1$-E $_N$ } ─ 60

↓

Calcul du niveau de certitude associé à chaque E $_i$ ─ 62

## FIG.3

FIG.4

FIG.5

Animal ⋯ Sujet ⋯ Manip → Objet → S₁
Manip → Manip-localisation → Loc

FIG.6

D ← Sujet ← Manip ⋯ Objet ⋯ Substance
Manip → Manip-localisation → Loc : Paris

FIG.7

D ← Sujet ← Manip → Objet → S₁
Manip → Manip-localisation → Loc : Paris

FIG.8

Obtention modèle structuré G —70

Acquisition {Obs$_i$} —72

Initialisation RF$_p$ —74

Obs$_c$ = Obs$_1$ —76

Fusion RF$_p$ et Obs$_c$ → RF$_c$ —78

Obtention ensemble focaux/RF$_c$ —80

Calcul des niveaux de certitude associés —82

88

Obs$_c$ = Obs

RF$_p$ ← RF$_c$ —84

Oui

Observation suivante Obs ?

Non

FIN

86

90

<u>FIG.9</u>

Requête R

Modélisation structurée R: $CG_R$ ——92

Filtrage des ensembles focaux $E_i$ selon $CG_R$ ——94

Calcul bel (R), pl(R) ——96

Obtention intervalle de confiance $I_R$ ——98

## FIG.10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 0807232

**Littérature non-brevet citée dans la description**

- High-level fusion based on conceptual graphs. **CLAIRE LAUDY et al.** INFORMATION FUSION, 2007 10TH INTERNATIONAL CONFERENCE ON. IEEE, 01 Juillet 2007, 1-8

- **ALAIN APPRIOU.** Approche générique de la gestion de l'incertain dans les processus de fusion multisenseur. *Traitement du Signal,* 31 Décembre 2005, 307-319